## Europäisches Patentamt
## European Patent Office
## Office européen des brevets

(19)

(11) Veröffentlichungsnummer : **0 168 517 B1**

(12) **EUROPÄISCHE PATENTSCHRIFT**

(45) Veröffentlichungstag der Patentschrift :
08.07.87

(51) Int. Cl.⁴ : **B 25 B 27/30**

(21) Anmeldenummer : **84108538.4**

(22) Anmeldetag : **19.07.84**

(54) **Spannvorrichtung für Achsfedern zum Ein- und Ausbauen von Stossdämpfern bei Kraftwagen.**

(43) Veröffentlichungstag der Anmeldung :
**22.01.86 Patentblatt 86/04**

(45) Bekanntmachung des Hinweises auf die Patenterteilung : **08.07.87 Patentblatt 87/28**

(84) Benannte Vertragsstaaten :
**FR**

(56) Entgegenhaltungen :
**FR-A- 2 290 276**
**US-A- 2 646 618**
**US-A- 3 883 116**
**US-A- 4 061 308**

(73) Patentinhaber : **Klann, Horst**
**Terra-Wohnpark 11**
**D-7730 Villingen-Schwenningen 24 (DE)**

(72) Erfinder : **Klann, Horst**
**Terra-Wohnpark 11**
**D-7730 Villingen-Schwenningen 24 (DE)**

(74) Vertreter : **Neymeyer, Franz, Dipl.-Ing. (FH)**
**Haselweg 20**
**D-7730 Villingen 24 (DE)**

Jouve, 18, rue St-Denis, 75001 Paris, France

## Beschreibung

Die Erfindung betrifft eine Spannvorrichtung für Achsfedern zum Ein- und Ausbauen von Stoßdämpfern bei Kraftwagen, bestehend aus einem gabelartigen, zweischenkligen Bügel, an dessen freien Schenkelenden wahlweise ein im wesentlichen U-förmiger Abstützteil oder ein Bolzen zu deren Abstützung an einem Karosserieteil einsetzbar ist und dessen gegenüberliegendes Ende mittels einer Schraubspindel, die mit einem Ende ebenfalls an einem Karosserieteil befestigbar ist, unter gleichzeitiger Komprimierung der den Stoßdämpfer umschließenden Achsfeder in Federspannrichtung bewegbar ist.

Derartige Spannvorrichtungen sind erforderlich, um bei manchen Fahrzeugtypen, insbesondere bei Personenkraftwagen, Stoßdämpfer auswechseln, d. h. aus- und einbauen zu können, ohne daß die den Stoßdämpfer umschließende schraubenförmige Achsfeder ebenfalls aus dem Fahrzeug ausgebaut werden muß. Mit Hilfe dieser Spannvorrichtung soll die Achsfeder mit ihrem unteren Federteller, auf dem sie sich mit dem unteren Ende abstützt, so weit von dem Flanschring, auf welchem der Federteller normalerweise aufsitzt, durch Verkürzung, d. h. durch Spannen der Feder abgehoben und in der abgehobenen Lage gehalten werden, so daß der an seinen beiden Enden gelöste Stoßdämpfer unten aus der Feder herausgezogen und ggf. durch einen anderen ersetzt werden kann.

Es gibt mehrere Kraftfahrzeugtypen, bei denen das Ein- und Ausbauen der Stoßdämpfer auf diese Weise erfolgt, bei denen aber wegen der unterschiedlichen Karosseriekonstruktionen, Federlängen und Platzverhältnissen jeweils spezielle unterschiedliche Spannvorrichtungen verwendet werden müssen. Es gibt solche Spannvorrichtungen, die aber jeweils nur für einen bestimmten Fahrzeugtyp verwendbar sind. Bei diesen bekannten Spannvorrichtungen besteht der gabelartige, zweischenklige Bügel aus einem einstückigen, die Form eines offenen kreisförmigen Ringes aufweisenden Teil, dessen Schenkelenden in einem gewissen Abstand voneinander parallel nach außen gerichtet sind. Auf der den Schenkelenden gegenüberliegenden Außenseite des Bügels ist eine kleine Brücke bzw. sind hakenförmige Vorsprünge angeordnet, an denen Haken oder eine Gewindespindel einhängbar sind. Bei einer der bekannten gattungsgemäßen Spannvorrichtungen ist es nicht möglich zum Spannen der Achsfeder eine Gewindespindel am Bügel anzusetzen. Statt dessen muß das Fahrzeug auf eine Hebebühne gestellt werden. Mit Hilfe eines Wagenhebers muß die Achsfeder, deren Stoßdämpfer ausgebaut werden soll, durch Hochheben des betreffenden Achsabschnittes zusammengedrückt werden. In der zusammengedrückten Stellung der Feder ist dann der Bügel anzusetzen und mittels Haken in der zusammengedrückten Lage zu arretieren. Danach wird die Radachse wieder entlastet, der Wagenheber entnommen, so daß die Radachse nach unten hängt, während die Feder zusammengedrückt bleibt. Abgesehen davon, daß diese Arbeitsmethode den Sicherheitsvorschriften widerspricht und sehr umständlich ist, läßt sie sich auch nur bei einem einzigen Wagentyp mit Hilfe des bekannten Bügels durchführen.

Der Erfindung liegt die Aufgabe zugrunde, eine Spannvorrichtung der eingangs genannten Art zu schaffen, die in ihrer Form auf einfache Weise derart variierbar ist, daß sie bei mehreren Fahrzeugtypen zum Ein- und Ausbau der von Achsfedern umgebenen Stoßdämpfer geeignet ist und bei der in jedem Fall zum Spannen, d. h. zum Zusammendrücken der Achsfedern eine Gewindespindel unmittelbar am Bügel angesetzt werden kann.

Gelöst wird diese Aufgabe erfindungsgemäß dadurch, daß der Bügel aus zwei separaten Schienen und einem Verbindungsteil besteht, der in seinen planparallelen Endstirnflächen jeweils mit einer axialen Gewindebohrung versehen und durch Schrauben, welche durch Bohrungen der Schienenenden des Bügels steckbar sind, mit den Schienen unter Verwendung von Distanzringen verbindbar ist, und der eine Querbohrung zur drehbaren Aufnahme einer sich daran abstützenden, mit der Gewindespindel verschraubten Gewinderohres aufweist, wobei an den dem Verbindungsteil gegenüberliegenden Schienenenden der Uförmige Abstützteil mittels Schrauben befestigbar ist.

Der Hauptvorteil, der durch den erfindungsgemäßen Aufbau des Bügels erzielt wird, besteht darin, daß der Bügel sowohl in seiner Breite als auch in seiner Länge variierbar ist. Durch die Befestigung der Schienen an dem Verbindungsteil mittels Schrauben ist es möglich, den Verbindungsteil in jede beliebige Winkellage zu drehen, was bedeutet, daß auch die Gewindespindel und das Gewinderohr in bezug auf die Schienen jede beliebige Winkellage einnehmen können. Auch der Abstützteil, der an Stelle eines Steckbolzens zum Verbinden der dem Verbindungsteil gegenüberliegenden Schienenenden mit einem Karosserieteil verwendet werden kann, läßt sich in jede beliebige Lage drehen, in dem er ebenfalls durch Schrauben mit den Schienenenden verbindbar ist, wobei auch hier in analoger Weise zum Befestigungsteil Distanzringe oder Distanzscheiben zum Ausgleich des Schienenabstandes verwendet werden können.

Für manche Anwendungsfälle ist es zweckmäßig, wenn die dem Verbindungsteil gegenüberliegenden Endabschnitte der Schiene mit zumindest annähernd rechtwinklig abstehenden Stützlaschen versehen sind.

Mit Hilfe solcher Stützlaschen läßt sich der Bügel besser an unterschiedliche Achsfederlängen anpassen.

Diese Anpassbarkeit an unterschiedliche Federlängen wird noch dadurch erhöht, daß die Stützlaschen mittels Schrauben lösbar an den Schienen befestigt sind, weil dadurch die Möglichkeit besteht, die Laschen nach oben oder nach unten zu richten.

Vorteilhaft ist es auch, wenn die Schienen und die Stützlaschen jeweils aus geraden Flachstahlstücken von wenigstens 4 mm Dicke und wenigstens 20 mm Breite bestehen.

Dadurch erreicht man bei ausreichender Stabilität eine verhältnismäßig leichte Bauweise. Außerdem sind die Schienen und Stützlaschen, die zweckmäßigerweise jeweils mit den gleichen Bohrungen versehen sind, gegeneinander austauschbar, was die Handhabung insbesondere den Zusammenbau des Bügels erleichtert.

Als sehr vorteilhaft hat sich auch erwiesen, daß der Verbindungsteil mit einem koxial zu seiner Querbohrung angeordneten Lagerzylinder mit einem Axiallager versehen ist, in welchem das Gewinderohr lose aufgenommen ist.

Auf diese Weise ist das Gewinderohr einerseits in dem Verbindungsteil unter Last leichter drehbar gelagert, andererseits aber in Richtung seiner eigenen Achse stabil geführt und jederzeit leicht aus dem Verbindungsteil herausnehmbar.

Ein weiterer Vorteil wird dadurch erreicht, daß die Bohrungen zur Aufnahme der zur Befestigung des Verbindungsteiles dienenden Schrauben in den beiden Schienen in Querrichtung der Schiene versetzt zueinander angeordnet sind.

Es ist dadurch möglich, den beiden Schienen eine relative Schräglage zueinander zu geben, welche zumindest annähernd dem schiefen Verlauf der Auflagefläche des der Windungssteigung der Achsfeder angepaßten Federtellers anzugleichen und somit eine sicherere Auflage dieses Federtellers und damit eine gleichmäßigere Lastverteilung auf den beiden Schienen zu erzielen.

Dadurch, daß in weiterer Ausgestaltung der Erfindung der Abstützteil aus zwei zueinander parallelen, jeweils mit Durchsteckoder Gewindebohrungen versehenen Flachteilen besteht, die jeweils an einem Endabschnitt gabelförmig ausgebildet sind und deren andere Enden durch eine sich in Längsrichtung erstreckende Platte miteinander verbunden sind, welche wenigstens eine Bohrung oder ein Langloch aufweisen, wird der Vorteil erreicht, daß sich die dem Verbindungsteil gegenüberliegenden Endabschnitte der Schienen mittels des Abstützteiles auf einer Querwelle des Achslenkers abstützen und zugleich durch die Platte mit der Bohrung oder dem Langloch mit Hilfe einer Schraube oder eines Steckbolzens an einem nahen Karosserieteil befestigen und somit gegen Kippen sichern lassen.

Um auch die Länge des Gewinderohres der jeweils gegebenen Achsfederlänge anpassen zu können, weist das Gewinderohr an seinem von der Gewindespindel abgewandten Endabschnitt einen Stützring auf, auf dem wahlweise mehrere Distanzringe aufsetzbar sind.

Außerdem sind zur wahlweisen Befestigung an den Schienen gelochte Winkel- oder T-Profilstücke mit über die Breite der Schienen hinaus verlängerten Anschlagfingern vorgesehen, durch welche ein Verschieben einesauf den Schienen aufgesetzten Federteller verhindert und somit die Funktionssicherheit erhöht werden kann.

Anhand der Zeichnung wird nun im folgenden ein Ausführungsbeispiel der Erfindung näher erläutert. Es zeigt :

Fig. 1 die wesentlichsten Einzelteile der erfindungsgemäßen Spannvorrichtung in perspektivischer Explosionsdarstellung ;

Fig. 2 die komplett zusammengeschraubte Spannvorrichtung in perspektivischer Ansicht ;

Fig. 3 eine in Arbeitsposition am Federteller einer Achsfeder eines Kraftwagens angesetzte Spannvorrichtung in etwas schematisierter Perspektivdarstellung.

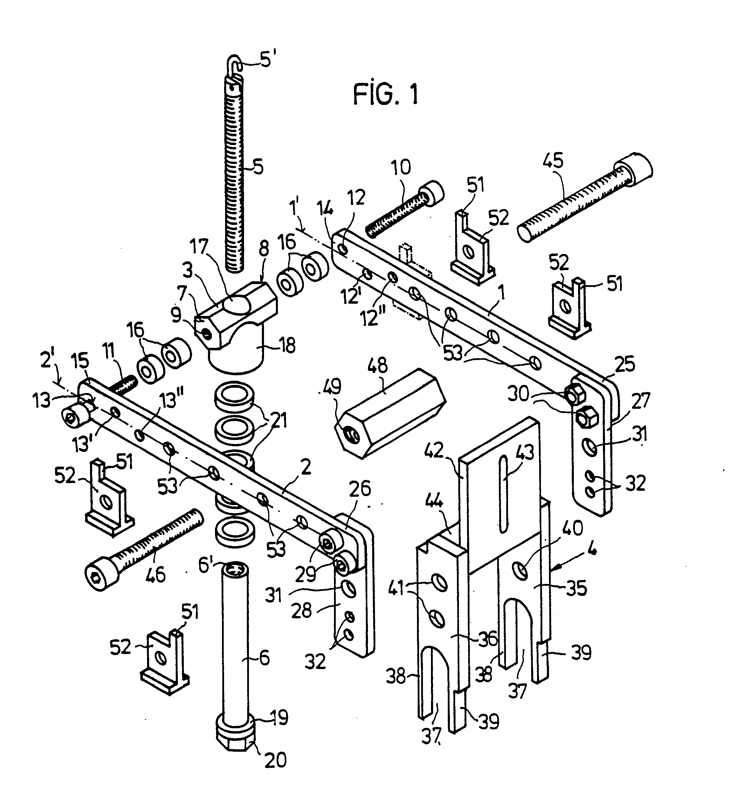

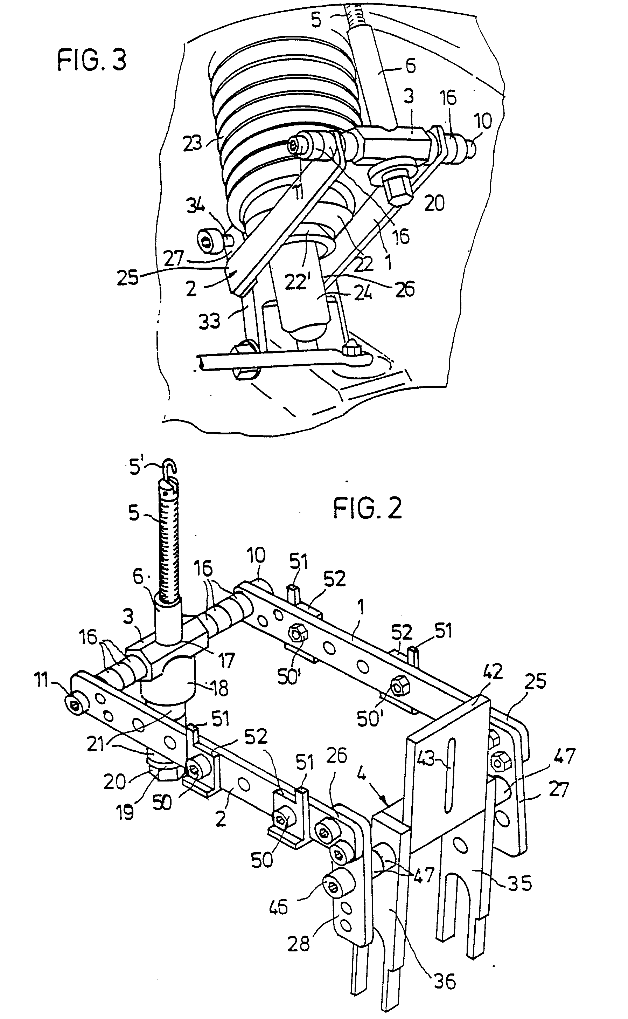

Wie am besten aus der Fig. 1 ersichtlich ist, besteht die Spannvorrichtung aus zwei separaten Schienen 1 und 2, einem Verbindungsteil 3, einem Abstützteil 4, einer Schraubspindel 5 und einem Gewinderohr 6. Die Schraubspindel 5 ist an ihrem freien Ende mit einem Haken 5' versehen, mit dessen Hilfe sie z. B. an einen Querbolzen oder in einem Loch der Karosserie einhängbar ist. Der Verbindungsteil 3 besteht aus einem Sechskantprofil mit planparallelen Stirnflächen 7 und 8, in denen sich eine durchgehende zentrale Gewindebohrung 9 zur Aufnahme von Befestigungsschrauben 10 und 11 befindet, die durch Bohrungen 12 und 13 der Schienenenden 14 und 15 steckbar sind. Um den Abstand der beiden Schienen 1 und 2 voneinander, bei deren Befestigung an dem Verbindungsteil 3 variieren zu können, sind mehrere planparallele Distanzringe 16 vorgesehen, die wahlweise innerhalb oder außerhalb der Schienen 1 und 2 auf die Befestigungsschrauben 10 und 11 setzbar sind. Während in der Fig. 1 auf beiden Seiten des Verbindungsteiles 3 jeweils nur zwei Distanzringe 16 dargestellt sind, sind in Fig. 2 auf beiden Seiten des Verbindungsteiles 3 zwischen den Schienen 1 und 2 jeweils vier solche Distanzringe 16 angeordnet. Dabei können die Distanzringe alle dieselbe axiale Länge haben oder je nach Bedarf unterschiedlich lang sein. Das Sechskantprofil des Verbindungsteiles 3 dient als Schlüsselprofil zum Festhalten, wenn die Befestigungsschrauben 10 und 11 angezogen werden.

Der Sechskant des Verbindungsteiles 3 ist mit einer Querbohrung 17 versehen, zu welcher koaxial eine Lagerzylinder 18 angeordnet und mit dem Sechskant verbunden ist. In diesem Lagerzylinder 18 befindet sich ein in der Zeichnung nicht sichtbares Axiallager zur drehbaren, losen Aufnahme des mit einem Innengewinde 6' versehenen Gewinderohres 6, in welches die Schraubspindel 5 einschraubbar ist. Am unteren Ende besitzt das Gewinderohr 6 einen Stützring 19 und darunter ein SechskantSchlüsselprofil 20 an dem beispielsweise die Schlüsselnuß eines Schlagschraubers ansetzbar ist. Um die Eintauchtiefe des Gewinderohres 6 in den Lagerzylinder 18 bzw. den Verbindungsteil 3 variieren zu können, sind mehrere von Distanzscheiben 21 vorgesehen, die in beliebiger Anzahl auf das Gewinderohr 6 aufsetzbar sind, so daß der Abstand zwischen den Stützringen 19 und dem Axiallager des Lagerzylinders 18 mehr oder weniger groß gewählt werden kann und somit die Ausgangslänge der Schraubspindel 5 den jeweils gegebenen Raumverhältnissen im Stoßdämpferbereich des zu reparierenden Fahrzeuges anpaßbar ist. Es ist aus Fig. 1 auch erkennbar, daß die Bohrungen 12 und 13 jeweils nicht in der Längsmitte 1' bzw. 2' der Schienenenden 14 und 15 angeordnet sind, sondern daß die Bohrung 13 unterhalb der Längsmitte 2' und die Bohrung 12 oberhalb der Längsmitte 1' der Schiene 2 bzw. 1 angeordnet ist. Dadurch ergibt sich eine gewollte Schieflage zwischen den beiden Schienen 1 und 2 und somit eine Lageanpassung der Schienen 1 und 2 an den windungsschiefen Federteller 22 (Fig. 3) der zu spannenden Achsfeder 23, deren Stoßdämpfer 24 ausgewechselt werden soll. Dadurch wird eine gleichmäßigere Auflage des Federtellers 22 auf den Schienen 1, 2 und somit auch eine bessere Lastverteilung auf die beiden Schienen 1, 2 erzielt.

An den dem Verbindungsteil 3 gegenüberliegenden Endabschnitten 25 und 26 der Schienen 1 und 2 sind jeweils rechtwinklig nach unten gerichtete Stützlaschen 27 und 28 mittels Schrauben 29 und Muttern 30 lösbar befestigt, die mit mehreren Bohrungen 31 und 32 versehen sind und die statt nach unten auch nach oben gerichtet sein können. Diese Richtungsumkehr der Stützlaschen 27 und 28 kann entweder durch Wenden der Schienen 1 und 2 oder durch Umsetzen der Stützlaschen 27 und 28 an den Schienen 1 und 2 erreicht werden. Die Stützlaschen 27 und 28 dienen in jedem Fall als direkte oder indirekte Verbindungsteile zu einem Stützlager an einem Karosserieteil, das beispielsweise aus einem U-förmigen Profilsteg 33 bestehen kann, der eine in der Zeichnung nicht sichtbare Querbohrung aufweist, in welche mittels Dorns ein durch die Bohrungen 31 der Stützlaschen 27 und 28 ragender Gewindedorn 34 oder Steckzapfen steckbar ist.

Die Schienen 1 und 2 und auch die Stützlaschen 27 und 28 bestehen jeweils aus geraden Flachstahlstücken von mindestens 4 mm Dicke und mindestens 20 mm Breite, sodaß trotz zahlreicher Bohrungen eine ausreichende Fertigkeit gewährleistet ist. Andererseits soll aber der gesamte Bügel möglichst leicht und handlich sein.

Außer den Bohrungen 12 und 13 haben die Endabschnitte 14 und 15 der beiden Schienen 1 und 2 noch jeweils zwei weitere Bohrungen 12' und 12" bzw. 13' und 13" auf, die ebenfalls außermittig angebracht sind. So sitzt die Bohrung 12' unterhalb der Längsmitte 1' und die Bohrung 12" oberhalb der Längsmitte 1'. Umgekehrt ist am Endabschnitt 15 der Schiene 2 die Bohrung 13' oberhalb der Längsmitte 2' und die Bohrung 13" unterhalb der Längsmitte 2' angeordnet. Durch diese Bohrungen 12', 12" und 13', 13" ist die zusätzliche Möglichkeit gegeben den Verbindungsteil 3 an den Schienen 1 und 2 nach innen zu versetzen und zugleich den windungsschiefen Versatz der beiden Schienen 1 und 2 zu variieren.

Der Abstützteil 4 besteht aus zwei parallel zueinander verlaufend angeordneten, aus Flachmaterial gebildeten Fußstützen 35 und 36, deren untere Enden durch U-förmige Ausschnitte 37 jeweils gabelförmig ausgebildet sind und zwei parallele Gabelschenkel 38 und 39 aufweisen und in welchen sich jeweils zwei Bohrungen 40 bzw. 41 befinden. An ihren oberen Enden sind die beiden Fußstützen 35 und 36 durch eine sich in deren Längsrichtung erstreckende Platte 42 miteinander verbunden, welche in ihrer Mitte ein Langloch 43 aufweist. Während die Platte 42 so angeordnet ist, daß ihre eine Flachseite mit den schmalen Längskanten der beiden Fußstützen 35 und 36 bündig verläuft, ist zur Erhöhung der Verbindungstabilität noch zusätzlich ein Quersteg 44 zwischen den oberen Enden der beiden Fußstützen 35 und 36 angeordnet. Um den Abstützteil 4 in der in Fig. 2 dargestellten Weise an den Stützlaschen 27 und 28 in beliebiger Winkellage befestigen zu können, sind Schrauben 45 und 46 und Distanzringe 47 sowie ein Sechskantstück 48 vorgesehen, welches mit einer zentralen durchgehenden Gewindebohrung 49 versehen ist und passend zwischen die beiden Fußstützen 35 und 36 eingesetzt werden kann. Die Schrauben 45 und 46 werden dann jeweils durch eine der Bohrungen 31 und 40 oder 41 gesteckt und in die Gewindebohrung 49, die sich in koaxialer Lage mit zwei der Bohrungen 40 und 41 befindet, eingeschraubt. Mit Hilfe der gabelförmigen unteren Endabschnitte sind die Fußstützen 35 und 36 des Abstützteiles 4 bei manchen Fahrzeugtypen beispielsweise auf Querbolzen eines Achslenkers formschlüssig abstützbar. Dabei ist es aber erforderlich, daß die Platte 42 mit Hilfe einer durch das Langloch 43 gesteckten und an einem Karosserieteil des Fahrzeuges zu befestigenden Schraube gesichert wird damit der Abstützteil 4 nicht kippen kann. Der Abstützteil 4 dient somit als Stützund Verbindungselement zwischen Karosserie und den Stützlaschen 27 und 28, bzw. den Schienen 1und 2.

Um sicher zu stellen, daß ein unter dem Druck der Feder 23 auf den beiden Schienen 1 und 2 aufsitzender Federteller 22 sich in Längsrichtung der Schienen nicht verschieben kann, sind T-förmig profilierte Arretierteile 52 vorgesehen, die an den Innen- oder Außenflächen der Schienen 1 und 2 mittels Schrauben 50 und Muttern 50' in der in Fig. 2 dargestellten Weise befestigt werden können und welche jeweils Anschlagfinger 51 aufweisen, welche die Oberkanten der Schienen 1 bzw. 2 nach oben überragen. Zur Befestigung dieser Arretierteile 52 sind die Schienen 1 und 2 mit mehreren jeweils mittig angeordneten Bohrungen 53 versehen. Durch das T-förmige Profil lassen sich die Arretierteile 48 mit jeweils lediglich einer Schraube verdrehsicher an den Schienen 1 und 2 befestigen, in dem jeweils ein Schenkel des T-Profils an der Unterkante der betreffenden Schiene 1 bzw. 2 formschlüssig anliegt.

In Fig. 3 ist beispielsweise dargestellt, wie die erfindungsgemäße Spannvorrichtung an den Federteller 22 der Achsfeder 23 angesetzt werden kann, um den Federteller 22 von dem Ringflansch 22' des Stoßdämpfers 22 abzuheben. Dabei sind die beiden Stützlaschen 27 und 28 der beiden Schienen 1 und 2 nach oben gerichtet und mittels des Gewindedorns 34 an dem Profilsteg 33 gelenkig befestigt. Die Schraubspindel 5 ist in der Nähe des oberen, nicht mehr sichtbaren Endes der Achsfeder 23 mit dem Haken 5' in eine Öffnung der Karosserie eingehängt. Durch Drehen des Gewinderohres 6 wird dann der Verbindungsteil 3 mit den Schienenenden 14, 15 nach oben gezogen und dadurch der Federteller 22 entgegen der Wirkung des Federdruckes vom Ringflansch 22' abgehoben und die Achsfeder dabei soweit verkürzt, daß der Stoßdämpfer 24 nach unten entfernt und z. B. durch einen anderen ersetzt werden kann. Danach kann durch Drehen des Gewinderohres 6 in entgegengesetzter Richtung die Achsfeder wieder entspannt und dabei der Federteller 22 auf den Ringflansch 22' des neu eingesetzten Stoßdämpfers 24 gesetzt werden. Nach weiterem Lockern des Gewinderohres 6 kann dann die Spannvorrichtung wieder entfernt werden.

Bei anderen Fahrzeugtypen kann der Abstützteil 4 benutzt werden, um die Schienenenden 25 und 26 gelenkig an einem Karosserieteil zu befestigen, wie es vorstehend angedeutet ist.

Die vorstehend beschriebene Spannvorrichtung läßt sich aufgrund ihrer variablen Zusammensetzbarkeit nicht nur auf einfache Weise an unterschiedlich große, unterschiedlich starke und unterschiedlich lange Achsfedern von Kraftfahrzeugen sondern auch auf einfache Weise an unterschiedliche Karosserieverhältnisse individuell anpassen und mit der jeweils gebotenen Funktionssicherheit, die wegen der sehr hohen Unfallgefahr bei solchen Arbeiten unbedingt beachtet werden muß, verhältnismäßig einfach anwenden. Dabei ist zudem noch die Möglichkeit gegeben, beispielsweise die Schraubspindel 5 statt mit einem Hakens 5' mit einer Einhängeöse zu versehen und auch den Abstützteil 4 im Bedarfsfalle durch einen anderen Raumverhältnissen angepaßten, modifizierten Abstützteil zu ersetzen. Das der erfindungsgemäßen Spannvorrichtung zugrunde liegende, seine große Variabilität begründende Grundprinzip des Aufbaus bietet für weitere Varianten und Anpassungsmöglichkeiten gute Voraussetzungen.

## Patentansprüche

1. Spannvorrichtung für Achsfedern zum Aus- und Einbauen von Stoßdämpfern (24) bei Kraftwagen, bestehend aus einem gabelartigen, zweischenkligen Bügel, an dessen freien Schenkelenden (25) wahlweise ein im wesentlichen U-förmiger Abstützteil (4) oder ein Bolzen (34) zu deren Abstützung an einem Karosserieteil (33) einsetzbar ist und dessen gegenüberliegendes Ende mittels einer Schraubspindel (5), die mit einem Ende ebenfalls an einem Karosserieteil befestigbar ist, unter gleichzeitiger Komprimierung der den Stoßdämpfer (24) umschließenden Achsfeder (23) in Federspannrichtung bewegbar ist, dadurch gekennzeichnet, daß der Bügel aus zwei separaten Schienen (1, 2) und einem Verbindungsteil (3) besteht, der in seinen planparallelen Endstirnflächen (7, 8) jeweils mit einer axialen Gewindebohrung (9) versehen und durch Schrauben (10, 11) welche durch Bohrungen (12, 13, 12', 13', 12'', 13'') der Schienenenden (14, 15) steckbar sind, mit den Schienen (1, 2) unter Verwendung von Distanzringen (16) verbindbar ist, und der eine Querbohrung (17) zur drehbaren Aufnahme eines sich daran abstützenden, mit der Gewindespindel (5) verschraubten Gewinderohres (6) aufweist, wobei an den dem Verbindungsteil (3) gegenüberliegenden Schienenenden (25, 26) der U-förmige Abstützteil mittels Schrauben (45, 46) befestigbar ist.

2. Spannvorrichtung nach Anspruch 1, dadurch gekennzeichnet, daß die dem Verbindungsteil (3) gegenüberliegenden Endabschnitte (25, 26) der Schienen (1, 2) mit zumindest annähernd rechtwinklig abstehenden Stützlaschen (27, 28) versehen sind.

3. Spannvorrichtung nach Anspruch 2, dadurch gekennzeichnet, daß die Stützlaschen (27, 28) mittels Schrauben (29) lösbar an den Schienen (1, 2) befestigt sind.

4. Spannvorrichtung nach einem der Ansprüche 1 bis 3, dadurch gekennzeichnet, daß die Schienen (1, 2) und die Stützlaschen (27, 28) jeweils aus geraden Flachstahlstücken von wenigstens 4 mm Dicke und wenigstens 20 mm Breite bestehen.

5. Spannvorrichtung nach Anspruch 1, dadurch gekennzeichnet, daß der Verbindungsteil (3) mit einem koaxial zu seiner Querbohrung (17) angeordneten Lagerzylinder (18) mit einem Axiallager versehen ist, in welchem das Gewinderohr (6) lose aufgenommen ist.

6. Spannvorrichtung nach Anspruch 1 oder 2, dadurch gekennzeichnet, daß die Bohrungen (12, 13, 12', 13', 12'', 13'') zur Aufnahme der zur Befestigung des Verbindungsteiles (3) dienenden Schrauben (10, 11) in den beiden Schienen (1, 2) in Querrichtung der Schienen (1, 2) versetzt zueinander angeordnet sind.

7. Spannvorrichtung nach Anspruch 1, dadurch gekennzeichnet, daß der Abstützteil (4) aus zwei zueinander parallelen, jeweils mit Durchsteck- oder Gewindebohrungen (40, 41) versehenen Flachteilen (35, 36) besteht, die jeweils an einem Endabschnitt gabelförmig ausgebildet sind und deren andere Enden durch eine sich in Längsrichtung erstreckende Platte (42) miteinander verbunden sind, welche wenigstens eine Bohrung oder ein Langloch (43) aufweist.

8. Spannvorrichtung nach Anspruch 1 oder 2, dadurch gekennzeichnet, daß das Gewinderohr (6) an seinem von der Gewindespindel (5) abgewandten Endabschnitt einen Stützring (19) aufweist, auf den wahlweise mehrere Distanzringe (21) aufsetzbar sind.

9. Spannvorrichtung nach einem der Ansprüche 1 bis 8, dadurch gekennzeichnet, daß zur wahlweisen Befestigung an den Schienen (1, 2) gelochte Winkel- oder T-Profilstücke (48) mit über die Breite der Schienen (1, 2) hinaus verlängerten Anschlagfingern (51) vorgesehen sind.

## Claims

1. Suspension spring clamping device for the fitting and removal of shock absorbers (24) in motor vehicles, consisting of a fork-like, two-sided bracket, at the free side ends (25) of which according to choice a substantially U-shaped support part (4) or a bolt (34) is insertable for its supporting on a bodywork part (33) and the opposite end of which is movable in the spring stressing direction by means of a threaded spindle (5), which is securable with one end likewise to a bodywork part, with simultaneous compression of the suspension spring (23) surrounding the shock absorber (24), characterised in that the bracket consists of two separate rails (1, 2) and a connecting part (3) which is provided in each of its plane-parallel end faces (7, 8) with an axial threaded bore (9) and is connectable with the rails (1, 2), distance rings (16) being used, by screws (10, 11) which are pushable through bores (12, 13, 12', 13', 12", 13") of the rail ends (14, 15), and which connecting part comprises a transverse bore (17) for the rotatable reception of a threaded tube (6) supported thereon and screwed to the threaded spindle (5), the U-shaped support part being securable by means of screws (45, 46) to the rail ends (25, 26) lying opposite to the connecting part (3).

2. Clamping device according to Claim 1, characterised in that the end sections (25, 26) of the rails (1, 2) lying opposite to the connecting part (3) are provided with support shackles (27, 28) protruding at least approximately at right angles.

3. Clamping device according to Claim 2, characterised in that the support shackles (27, 28) are detachably secured to the rails (1, 2) by means of screws (29).

4. Clamping device according to one of Claims 1 to 3, characterised in that the rails (1, 2) and the support shackles (27, 28) consist each of straight flat steel pieces of at least 4 mm. thickness and at least 20 mm. width.

5. Clamping device according to Claim 1, characterised in that the connecting part (3) is provided with a bearing cylinder (18), arranged coaxially with its transverse bore (17), with an axial bearing in which the threaded tube (6) is loosely received.

6. Clamping device according to Claim 1 or 2, characterised in that the bores (12, 13, 12', 13', 12", 13") for the reception of the screws (10, 11) serving for the securing of the connecting part (3), in the two rails (1, 2), are arranged offset in relation to one another in the transverse direction of the rails (1, 2).

7. Clamping device according to Claim 1, characterised in that the support part (4) consists of two mutually parallel flat parts (35, 36), each provided with pushthrough or threaded bores (40, 41), which flat parts are each made in fork form at one end section and the other ends of which are connected with one another by a plate (42) extending in the longitudinal direction, which plate comprises at least one bore or a slot (43).

8. Clamping device according to Claim 1 or 2, characterised in that the threaded tube (6) comprises, at its end section remote from the threaded spindle (5), a support ring (19) on to which several distance rings (21) can be placed according to choice.

9. Clamping device according to one of Claims 1 to 8, characterised in that angle pieces or T-section pieces (48) perforated for securing according to choice to the rails (1, 2) are provided with stop fingers (51) prolonged beyond the width of the rails (1, 2).

## Revendications

1. Dispositif de compression des ressorts de suspension pour la pose et la dépose des amortisseurs (24) dans les véhicules automobiles, composé d'un étrier en fourche, à deux branches, dont les extrémités libres (25) peuvent être munies, pour leur supportage sur une partie de carrosserie (33), d'un élément d'appui (4) essentiellement en U ou d'un boulon (34), une tige filetée (5), dont une extrémité peut être également fixée à un élément de carrosserie, permettant de déplacer l'extrémité opposée dans le sens de compression des ressorts, en comprimant simultanément le ressort de suspension (23) qui enveloppe l'amortisseur (24), caractérisé en ce que l'étrier se compose de deux barres séparées (1, 2) et d'un élément de jonction (3), doté d'un taraudage axial (9) sur ses deux faces frontales extrêmes (7, 8), parallèles et planes, et que des vis (10, 11), enfoncées dans des trous (12, 13, 12', 13', 12", 13") prévus aux extrémités (14, 15) des barres, permettent d'assembler à ces dernières (1, 2), avec des bagues d'écartement (16) intercalaires, cet élément présentant un orifice transversal (17) qui reçoit et supporte, avec une possibilité de rotation, un tube taraudé (6) vissé à la tige filetée (5), et l'élément d'appui en U pouvant être fixé par des vis (45, 46) sur les extrémités (25, 26) des barres, opposées à l'élément de jonction (3).

2. Dispositif de compression suivant la revendication 1, caractérisé en ce que les sections extrêmes (25, 26) des barres (1, 2), opposées à l'élément de jonction (3), sont munies d'éclisses d'appui (27, 28), en saillie à peu près perpendiculaire du moins.

3. Dispositif de compression suivant la revendication 2, caractérisé par une fixation amovible des éclisses (27, 28) sur les barres (1, 2), à l'aide de vis (29).

4. Dispositif de compression suivant l'une quelconque des revendications 1 à 3, caractérisé en ce que les barres (1, 2) et les éclisses d'appui (27, 28) se composent respectivement de pièces linéaires en acier plat, de 4 mm d'épaisseur et de 20 mm de largeur au moins.

5. Dispositif de compression suivant la revendication 1, caractérisé en ce que l'élément de jonction (3) est muni d'un cylindre-support (18) avec un palier de butée, coaxial à son orifice transversal (17) et permettant de recevoir le tube taraudé (6) amovible.

6. Dispositif de compression suivant l'une des revendications 1 et 2, caractérisé en ce que les trous (12, 13, 12', 13', 12", 13"), prévus pour recevoir les vis de fixation (10, 11) de l'élément de jonction (3), sont en déport mutuel sur les deux barres (1, 2), dans le sens transversal de ces dernières.

7. Dispositif de compression suivant la revendication 1, caractérisé en ce que l'élément d'appui (4) se compose de deux sections plates (35, 36) parallèles entre elles, respectivement munies de trous de passage ou de taraudages (40, 41) et réalisées en forme de fourche sur une section extrême, les autres extrémités étant reliées par une plaque (42), disposée dans le sens longitudinal et munie d'un orifice ou d'un trou longitudinal (43) au moins.

8. Dispositif de compression suivant l'une des revendications 1 et 2, caractérisé en ce que le tube taraudé (6) présente, sur sa section extrême opposée à la tige filetée (5), une bague d'appui (19) qui peut recevoir plusieurs bagues d'écartement (21).

9. Dispositif de compression suivant l'une quelconque des revendications 1 à 8, caractérisé par des profilés perforés en L ou en T (52), prévus pour une fixation quelconque sur les barres (1, 2) et dotés de butées (51), qui dépassent ces dernières sur leur largeur.

FIG. 1

FIG. 3

FIG. 2